# EUROPEAN PATENT APPLICATION

(11) **EP 1 195 496 A2**
(43) Date of publication of application: **10.04.2002**
(21) Application number: 01123639.5
(22) Date of filing: 02.10.2001
(51) Int. Cl.: E06B 3/66

(54) **Glass panel**

(30) Priority: 05.10.2000 JP 2000306003
(71) Applicant: NIPPON SHEET GLASS CO.,LTD, Osaka (JP)
(72) Inventor: Misonou, Masao, c/o Nippon Sheet Glass Co., Ltd., Osaka (JP)
(74) Representative: Blumenröhr, Dietrich

(57) **Abstract**

A glass panel includes a pair of glass sheets 1A, 1B having one side faces thereof disposed in opposition to each other with a gap V therebetween and a sealing material 3 for sealing outer peripheral edges of the pair of the glass sheets 1A, 1B. A damage protecting layer 12 is provided adjacent the outer peripheral edges of the other non-opposing faces of the glass sheets 1A, 1B.

## Description

### BACKGROUND OF THE INVENTION

### 1. FIELD OF THE INVENTION

The present invention relates to a glass panel including a pair of glass sheets having one side faces thereof in opposition to each other with a gap therebetween and having outer peripheries thereof sealed with a sealing material.

### 2. DESCRIPTION OF THE RELATED ART

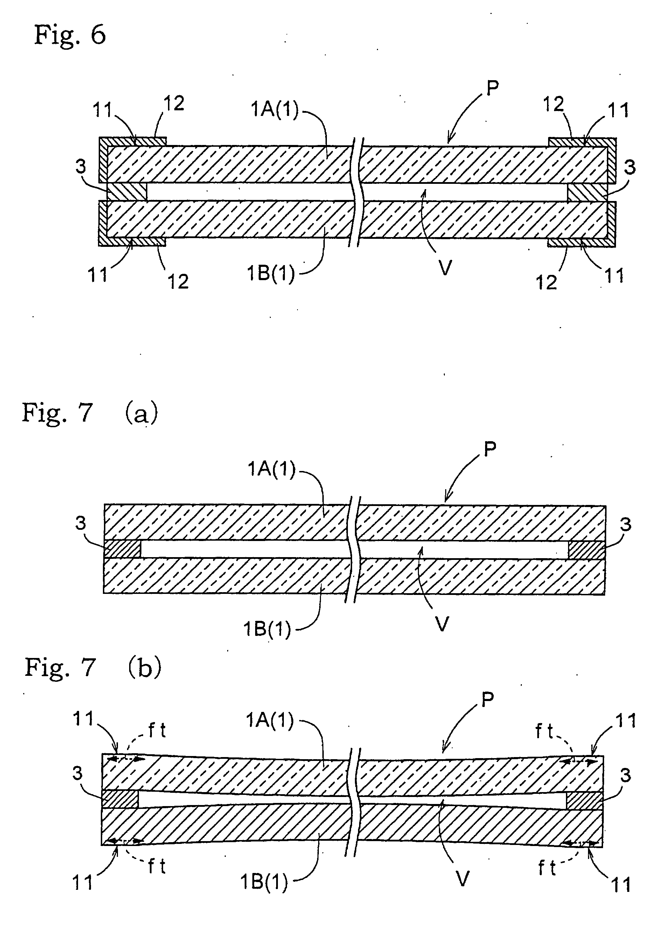

Conventionally, as illustrated in Fig. 7 (a), this type of glass panel P has a simple construction in which a pair of glass sheets 1 (1A, 1B) with appropriate dimensions are disposed in opposition to each other with a gap V therebetween and outer peripheries of the glass sheets are fixedly sealed with a sealing material 3.

Therefore, with such conventional glass panel P, non-opposing side, i.e. outer faces of the glass sheets 1 remain exposed to the atmosphere, so that during or after the manufacture of the glass panel P, fine scratches or damages tend to be done on the exposed faces, particularly at the peripheral edges thereof. Moreover, with this conventional glass panel P, the non-opposing faces of the glass sheets remain exposed in the finished glass panel as well. Hence, if some scratches or damages are formed during e.g. the manufacture of these glass sheets per se, such scratches will remain at the peripheral edges of the non-opposing faces.

On the other hand, since the panel P contains the gap V therein, when an external force is applied to the glass panel P due to wind pressure, earthquake, fire, variation in the atmospheric pressure or water pressure or variation in the internal pressure associated with temperature variation, the glass sheets constituting the glass panel P would tend to be warped inwardly on the opposing face sides thereof. However, the outer peripheries of the pair of glass sheets forming the glass panel are restricted by the sealing material 3. Then, as schematically illustrated in Fig. 7 (b), a significant tensile stress (ft) based on an external force tends to be developed in the vicinity of the peripheral edges of the non-opposing faces of the glass sheets 1.

Such tensile stress (ft) can result in crack which may develop from the scar present adjacent the peripheral edges 11 of the non-opposing faces. And, this crack may sometimes result in breakage of the glass sheets 1 or may result even in breakage of the entire glass panel P in the worst case.

The present invention has been made with view to the above-described state of the art. A primary object of the invention is to provide a glass panel which is hardly broken when exposed to application of such external force.

### SUMMARY OF THE INVENTION

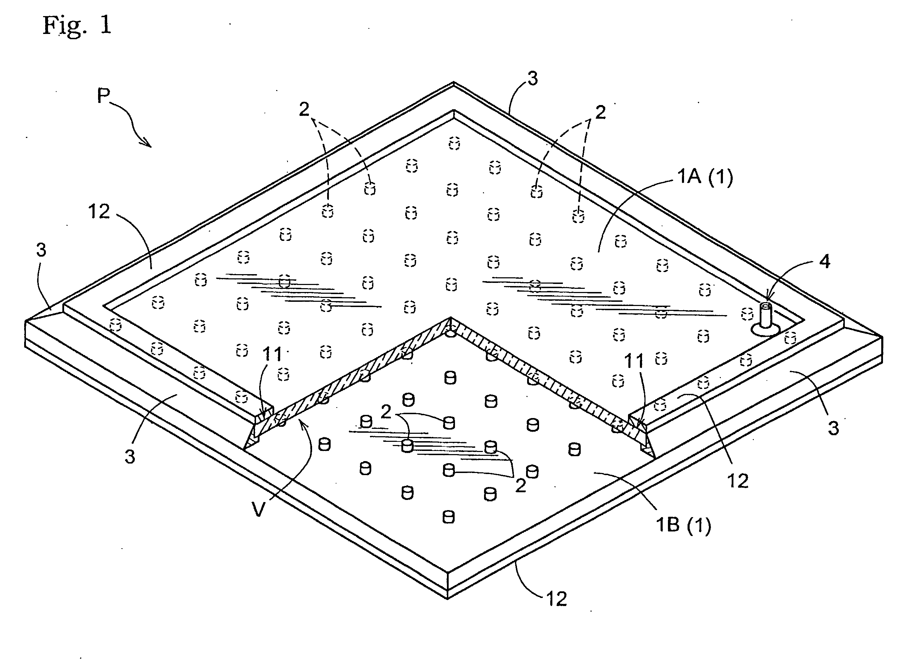

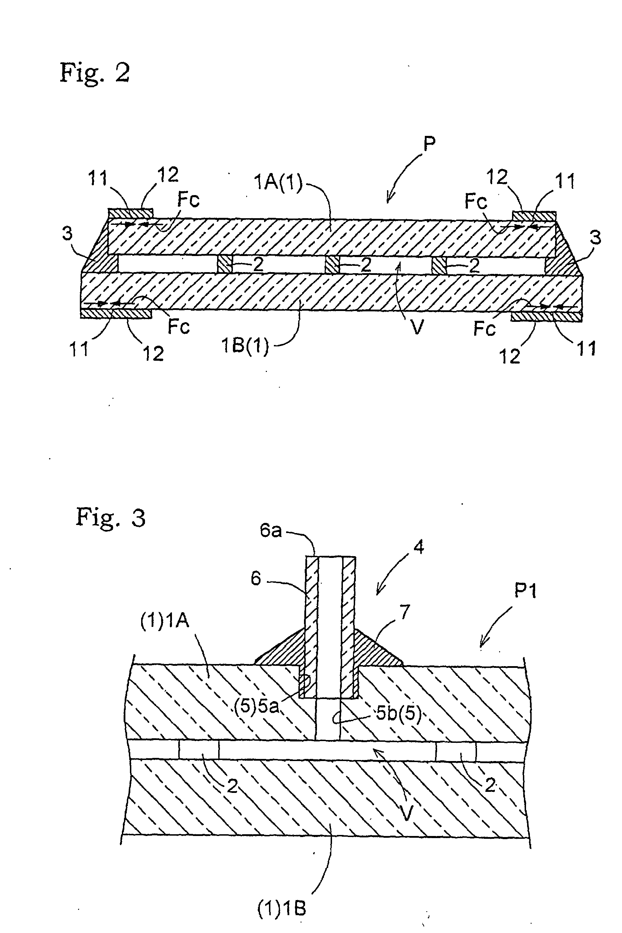

For accomplishing the above-noted object, a glass panel relating to the present invention, as illustrated in Figs. 1 and 2, comprises:
a pair of glass sheets 1A, 1B having one side faces thereof disposed in opposition to each other with a gap therebetween;
a sealing material 3 for sealing outer peripheral edges of the pair of glass sheets; and
a damage protecting layer 12 provided adjacent the outer peripheral edges 11 of the other non-opposing faces of the glass sheets.

That is, with the glass panel according to the present invention, a damage protecting layer for preventing damage is provided adjacent the outer peripheral edges of the non-opposing faces of the glass sheets constituting the glass panel. With this, during or after the manufacture of the glass panel, damages such as scars will hardly be made in the vicinity of the outer peripheral edges of the non-opposing faces of the glass sheets.

As the outer peripheral edges of the non-opposing faces of the glass sheets are effectively protected against damages thereto, even when a tensile stress is developed in the vicinity of these outer peripheral edges due to an external force applied to the glass panel, crack from these outer peripheral edges or resultant breakage of the entire glass panel will hardly occur.

In addition to the above-described characterizing feature, the sealing material may have a melting point which is lower than a softening point of the glass sheets; and the gap is maintained under a depressurized condition.

The glass panel having such construction above is a so-called vacuum multiple glazing. With the depressurized condition of the gap, the glazing or glass panel can be expected to provide superior heat-insulating performance and sound-insulating performance. Therefore, with this additional feature, it is possible to provide a glass panel which cannot be easily broken when exposed to an eternal force and which also provides superior heat-insulating and.sound-insulating performances.

Preferably, the damage protecting layer is formed of a protecting material which has a greater heat expansion coefficient than that of the glass sheets and which is integrated with the glass sheets by means of bonding.

The glass panel having the above feature can provide the effect of allowing a compressive stress to remain in the vicinity of the outer peripheral edges of the non-opposing faces of the glass sheets.

More particularly, during the manufacturing process of the glass panel, when a cooling step is carried out for cooling the glass panel including the protecting layer on the glass sheets from a high temperature to a low temperature, a stress is developed due to difference in the thermal expansion between the protecting layer and the glass sheets because the thermal expansion coefficient of the protecting layer is greater than that of the glass sheets. That is to say, the tendency of the protecting layer for contraction is checked by the glass sheets, and at the same time the glass sheets will tend to be contracted by the protecting layer. Eventually, a compressive stress is allowed to remain in the interface between the glass sheets and the protecting layer, i.e. on the non-opposing faces of the glass sheets. In this way, compressive stress is allowed to remain in the vicinity of the outer peripheral edges of the non-opposing faces of the glass sheets.

Incidentally, a compressive stress is developed in a direction normal to the interface between the protecting layer and the glass sheets, no removal of the interface due to the thermal expansion difference will occur.

Thus, a compressive stress is allowed to remain in the vicinity of the outer peripheral edges of the non-opposing faces of the glass sheets and this residual compression force acts as a "prestress". With this prestress, it is possible to change the stress, which would otherwise, i.e. without the prestress, function as a tensile stress, into a compressive stress.

Accordingly, if the glass panel is exposed to an external force, the tensile stress acting on the peripheral edges of the non-opposing faces of the glass sheets can be effectively restricted. Then, even if a scar is present at the outer peripheral edges of the non-opposing faces of the glass sheets, the tensile stress concentrated at this scar will be minimized, thereby to prevent formation of crack in the glass sheets and eventually breakage of the entire glass panel.

Moreover, in the case of the so-called vacuum multiple glazing for example, choice is usually made for the combination of the sealing material for sealing the glass sheets and the glass sheets per se with a minimal thermal expansion difference therebetween. Yet, as these still are of materials differing in their properties, a tensile stress tends to be developed in the vicinity of the peripheral edges of the non-opposing faces, so that stress and strain will remain at the sealed portion due to the thermal expansion property difference. As a result, a tensile stress tends to be developed in the vicinity of the sealed portion between the outer peripheral edges of the glass sheets, that is, in the vicinity of the peripheral edges of the non-opposing faces. However, according to the above-proposed construction, a compressive stress is caused to remain in this vicinity of the peripheral edges of the non-opposing faces as described above, breakage will hardly occur in spite of the presence of such stress and strain.

Further, in the case of vacuum multiple glazing, the gap is depressurized, tending to cause warpage of the glass sheets toward the gap, so that a greater tensile stress will tend to act on the peripheral edges of the non-opposing faces of the glass sheets. However, if a compressive stress is allowed to remain in the vicinity of these peripheral edges of the non-opposing faces as proposed above, it is possible to prevent generation of crack in the glass sheets due to the depressurization of the gap. Whereby the air-tight condition and the depressurized condition of the gap can be effectively maintained, and the assembly can be expected to achieve its heat-insulating performance and sound-insulating performance fully as much as originally intended.

Preferably, the protecting material may contain, as a major component thereof, a low-melting glass having a lower melting point than the softening point of the glass sheets.

With this construction, it becomes possible to enhance the hardness of the protecting layer, thus improving the protective performance of this protecting layer.

Moreover, since the protecting material comprises a low-melting glass, compared with other protecting layer comprised of a metal material integrally formed with the glass sheets via an adhesive for example, the above assembly can provide superior bonding integration with respect to the glass sheets, thus higher bonding strength and air-tightness.

That is to say, since it is possible to enhance the protecting ability of the protecting layer as well as the bonding strength and air-tightness relative to the glass sheets, so that occurrence of scars or other damages on the glass sheets protected with the protecting layer may be further restricted.

Still preferably, the protecting layer may be made of a material having a higher heat absorbing ability than the glass sheets and this protecting layer is formed integrally with the glass sheets by means of bonding.

With this construction, it becomes possible to allow an even greater compressive stress to remain in the vicinity of the peripheral edges of the non-opposing faces of the glass sheets.

That is, an example of the above construction is a construction in which a material having a high heat absorptivity for e.g. near infrared beams is provided in the vicinity of the peripheral edges of the non-opposing faces of the glass sheets. Then, when this glass panel is subjected to a heating process, the protecting layer made of such material will easily reach a higher temperature than the glass sheets. Hence, when the protecting layer and the glass sheets are formed integrally with each other by means of bonding, even if the thermal expansion coefficient of the protecting layer is same as the thermal expansion coefficient of the glass sheets, the protecting layer will be heated to a higher temperature so as to provide a greater thermal expansion than the glass sheets, whereby a thermal expansion difference will be developed between the protecting layer and the glass sheets. Thereafter, during the cooling process to the room temperature, due to this thermal expansion difference, the protecting layer will tend to be contracted more than the glass sheets. As a result, a compressive stress is allowed to remain in the interface between the glass sheets and the protecting layer on the glass sheet side, i.e. on the non-opposing faces of the glass sheets. Needless to say, it is easy to cause such compressive stress to remain on the non-opposing faces of the glass sheets also when the thermal expansion coefficient of the protecting layer is greater than that of the glass sheets.

In this way, as a compressive stress is allowed to remain in the vicinity of the peripheral edges of the non-opposing faces of the glass sheets and this compression force functions as a prestress, a stress which would become a tensile force without such prestress can be transformed into a compressive stress.

Therefore, even when an external force is applied to the glass panel, the tensile stress affecting the peripheral edges of the non-opposing faces of the glass sheets can be effectively restricted. As a result, occurrence of crack in the glass sheets or breakage of the entire glass panel may be avoided advantageously.

### BRIEF DESCRIPTION OF THE DRAWINGS

Fig. 1 is a partially cutaway perspective view showing an example of a glass panel relating to the present invention,
Fig. 2 is a section showing the glass panel relating to the present invention
Fig. 3 is a section of principal portions of the glass panel relating to the present invention,
Fig. 4 is an explanatory view for illustrating a method of depressurizing a gap,
Fig. 5 is a section view showing principal portions of the glass panel relating to the present invention,
Fig. 6 is a section view showing principal portions of a glass panel according to a further embodiment of the present invention, and
Fig. 7 is an explanatory view of the prior art.

### DESCRIPTION OF THE PREFERRED EMBODIMENTS

With reference to the drawings, embodiments of the present invention will be described. In these drawings, those portions denoted with the identical reference marks as for the prior art comprise the identical or corresponding portions.

Figs. 1 and 2 show an embodiment of a glass panel P relating to the present invention.

This glass panel P includes a pair of glass sheets 1A, 1B having one sheet faces thereof opposed to each other with a gap V formed between the glass sheets 1A, 1B. Outer peripheral portions of these glass sheets 1A, 1B are sealed with a sealing material 3 (an example of sealing material) made of a low-melting glass 3 having a lower melting point than a softening point of the glass sheets 1. Further, a protecting layer 12 is provided for covering vicinity of peripheral edges 11 of non-opposing faces of the glass sheets 1 so as to allow a compressive stress Fc to remain at these peripheral edges 11 of the non-opposing side, i.e. outer side faces of the glass sheets 1.

Incidentally, between the glass sheets 1, a plurality of spacers 2 are disposed spaced apart from each other along the sheet faces so as to maintain the gap V under a depressurized condition.

In this embodiment, the glass sheets 1A, 1B are transparent float glass sheets having a thickness of about 3 mm. Of these glass sheets 1A, 1B, one glass sheet 1A is slightly smaller in area than the other glass sheet 1B, with the entire outer periphery of the other glass sheet 1B projecting from the outer periphery of the one glass sheet 1A. This arrangement improves efficiency in the forming operation of the gap V by allowing the low-melting glass material in the form of paste to be placed on the projecting portion when the outer peripheral edges of the glass sheets 1A, 1B are to be sealed with the sealing material 3.

The protecting layer 12 is formed of a protecting material in the form of a film or a plate, the material containing as a major component thereof the low-melting glass, such as solder glass, having a greater thermal expansion coefficient and also a lower melting point than the softening point of the glass sheets 1. The protecting material is formed integrally with the peripheral edges 11 of the non-opposing faces of the glass sheets 1A, 1B by means of bonding. As a specific example of bonding, the paste-like material having the above-described composition of the protecting material can be applied along the peripheral edges of the non-opposing faces of the glass sheets 1A, 1B. Next, at least the peripheral edges together with this paste-like material will be heated to about 500°C, whereby the paste-like material now in its molten condition by the high temperature will be bonded to the peripheral edges 11 of the non-opposing faces of the glass sheets 1A, 1B. Finally, the entire portions of the assembly including the paste-like material will be subjected to a cooling step to be cooled to the room temperature at a temperature lowering rate of 1 through 10°C/min. Upon completion of this cooling step, the paste-like material will have been rendered into a film or plate-like protecting glass comprising the protecting layer 12 bonded to the peripheral edges 11 of the non-opposing faces of the glass sheets 1A, 1B.

In forming the protecting layer 12 as described above, as shown in Fig. 2, preferably, regarding the width-wise areas of the protecting layer 12 to be bonded to the glass sheets 1A, 1B, its inner peripheral edge should be located closer to the center of the glass sheets 1A, 1B than the inner peripheral edge of the sealing material 3 and also its outer peripheral edge should be located adjacent the peripheral edges of the glass sheets 1A, 1B as much as the outer peripheral edge of the sealing material is located adjacent the peripheral edges of the glass sheets 1A, 1B. That is to say, it is preferred that the protecting layer 12 should be formed beyond the width of the sealing material 3 sealing the glass sheets 1A, 1B. Conversely, if this width of the protecting layer 12 were smaller, the layer 12 would fail to sufficiently cover the area adjacent the peripheral edges 11 of the non-opposing faces where a tensile stress tends to develop, so that the glass sheets 1A, 1B would more likely be cracked by the peripheral edge of the protecting layer 12 than otherwise.

Therefore, as a specific example of preferred dimension of the protecting layer 12, its width should be about 10 through 40 mm in case the sealing material 3 has a width of 5 to 20 mm. Further, if its thickness is set to 0.1 to 100 µm, the protecting layer will achieve its intended effect sufficiently and moreover it can be applied easily.

Some examples of method of applying the paste-like material to the vicinity of the peripheral edges of the non-opposing faces include the screen printing method, gravure coater method, dipping method, roller coater method. And, any one of these may be employed.

Also, the protecting material should be appropriately selected from those materials having higher melting points than the sealing material so that the protecting layer 12 will not be molten when the outer peripheral edges of the glass sheets 1 are sealed with the sealing material 2.

As described above, since the protecting material is molten and bonded with the glass sheets 1, even if a scar is present in the vicinity of the peripheral edges 11 of the non-opposing faces of the glass sheets 1 per se, such scar may be repaired by the protecting material. Further, during or after the manufacture of the glass panel, the protecting layer provides the protecting function for protecting the peripheral edges of the non-opposing faces of the glass sheets against scars or other damages.

In addition, when the cooling step is carried out as described above, there is developed a stress due to the thermal expansion difference between the protecting layer and the glass sheets since the thermal expansion coefficient of the protecting layer is greater than that of the glass sheets. That is, at the initial stage of the cooling step, the protecting layer is softened so that such stress due to thermal expansion different will be reduced or eliminated soon. With reduction in the temperature, however, the protecting layer, because of its thermal expansion coefficient greater than that of the glass sheets, will tend to be contracted more than the glass sheets, but this contracting tendency is effectively checked by the counter-tendency, i.e. expanding tendency, of the glass sheets. At the same time, the glass sheets in turn will be urged to be contracted by the protecting layer 12. And, eventually, as shown in Fig. 2, a compressive stress Fc is caused to remain in the interface between the glass sheets 1 and the protecting layer 12 on the side of the glass sheets, namely, to remain at least in the vicinity of the peripheral edges of the non-opposing faces of the glass sheets.

Incidentally, no detachment or separation will occur in the interface since a compressive force will develop in the direction normal to this interface between the protecting layer and the glass sheets.

As shown in Fig. 3, a suction portion 4 is formed in the one glass sheet 1A of the pair of glass sheets 1 to be used for evacuating the gap V. Referring more particularly to this suction portion 4, the one glass sheets 1A defines a stepped through hole 5 communicated with the gap V and consisting of a large hole 5a having a diameter of about 3 mm and a small hole 5b having a diameter of about 2 mm, and into the large hole 5a, a glass tube 5 is inserted to be normal to the sheet face, with the peripheral face of the through hole 5 and the glass tube 6 being air-tightly bonded to each other with the low-melting glass 7.

The spacer 2 is formed of a material such as stainless steel (SUS304) which has a compression strength of about 4.9 x 10⁸ Pa (5 x 10³ kgf/cm²) or more. Preferably, this spacer is formed as a cylindrical element having a diameter of 0.3 mm to 1.0 mm approximately and a height of 0.15 to 1.0 mm approximately. Also preferably, the spacers are spaced apart from each other by a distance of 20 mm approximately.

Next, there will be described a method of manufacturing a so-called multiple vacuum glazing in which the gap V of the above-described glass panel P is evacuated and maintained under a depressurized condition.

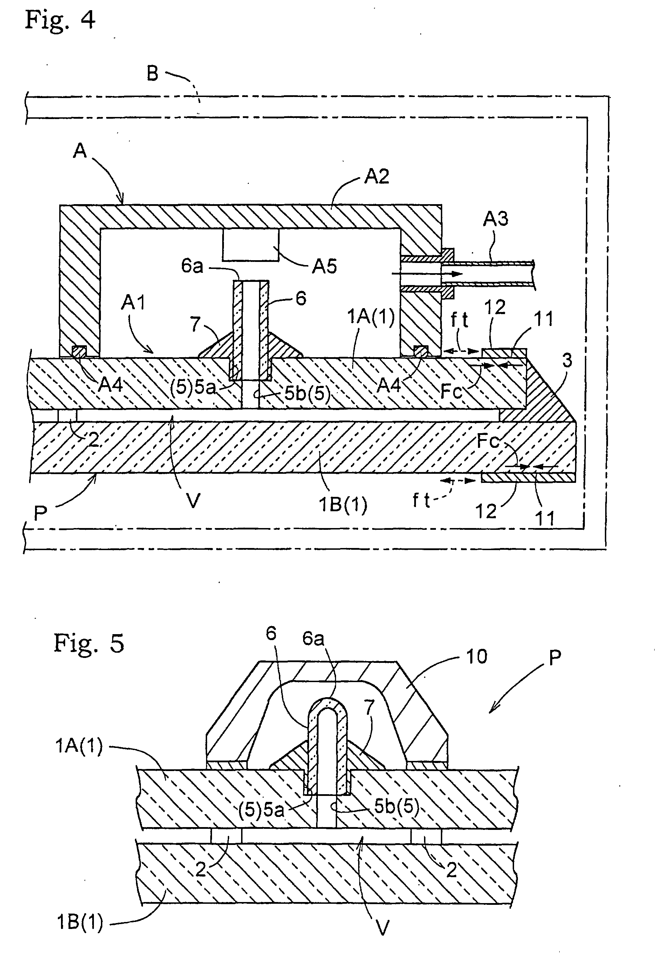

As shown in Fig. 4, the assembled glass panel P is supported horizontally within a heating furnace B with the glass sheet 1A being oriented upwards. On the sheet face of the glass sheet 1A of the glass panel P, a suction sealing device A is set so as to cover the glass tube 6 attached to the glass sheet 1A.

This suction sealing device A consists essentially of a suction cup A2 in the form of a cylinder with a bottom having a suction opening A1 and a flexible pipe A3 connected in communication with a lateral side of the suction cup A2 for evacuating gas inside the gap V. Further, to the bottom end face of the suction cup A2, there is mounted an elastic O-ring A4 for providing sealing relative to the glass sheet 1A. Also, to the inner side of the top face of the suction cup A2, there is mounted an electric heater A5 for heating and fusing a leading end 6a of the glass tube 6.

In operation, the leading open end of the suction cup A2 will be tightly attached to the sheet face of the glass sheet 1A via the O-ring A4. And, under this condition, the inside of the gap V is heated and activated to e.g. about 200°C, while the gas present inside the gap V is evacuated via the flexible pipe A3, so as to depressurize the gap to about 1.33 Pa (1.0 x 1.0⁻² Torr) or less.

Next, the leading end 6a of the glass tube 6 is heated locally (about 1000°C) and fused by means of the electric heater A5, so as to seal the through hole 5 as illustrated in Fig. 5.

After cooling under this condition, the suction cup A2 is removed and a protecting cap 10 prepared as a replacement therefor will be fitted on the glass sheet 1A so as to cover the fused glass tube 6.

Incidentally, when the gap V is depressurized, the glass sheets 1 will tend to be warped respectively toward the gap due to the difference between the inside pressure of the gap V and the atmospheric pressure. In this, if no compression force Fc remained at the peripheral edges 11 of the non-opposing faces of the glass sheets 1A, 1B, there would develop a tensile force ft of about 4.0 to 8.0 MPa at these peripheral edges of the non-opposing faces of the glass sheets 1. According to the present embodiment, however, the compression force Fc of about 0.5 to 3.0 MPa is allowed to remain at the peripheral edges 11 of the non-opposing faces of the glass sheets 1, such tensile force ft developed at these peripheral edges 11 of the non-opposing faces of the glass sheets 1 can be lessened, thereby to reduce the possibility of breakage of the glass sheets 1 during the evacuating operation of the gap V.

Further, as the protecting layer 12 is formed integrally with the glass sheets 1 by means of bonding, the air-tight condition inside the gap V may be maintained reliably.

Next, other embodiments of the invention will be described.
<1> In the foregoing embodiment, as an example of the protecting layer to be bonded integrally with the glass sheets, the layer is made of a protecting material having a greater thermal expansion coefficient than the glass sheets, the material containing, as a major component thereof, a low-melting glass having a lower melting point than the glass sheets. Alternatively, this protecting layer to be integrally bonded with the glass sheets may be made of a material having a higher heat absorptivity for e.g. near-infrared beam than the glass sheets.
In such case, it is possible to employ a paste-like material having a composition shown in Table 1 below. Incidentally, compositions of the glass component and of crystal fine powder component shown in Table 1 are shown in Tables 2 and 3 below, respectively. With these compositions, even if the paste-like material (protecting layer 12) has a substantially same thermal expansion coefficient as the glass sheets, due to its greater heat absorptivity than the glass sheets, it is possible to allow a compressive stress to remain in the glass sheets.

**Table 1**

| | mass % |
|---|---|
| glass component | 64 |
| crystal fine powder component | 20 |
| resin component | 5 |
| oil | 11 |

**Table 2**

| | mass % |
|---|---|
| PbO | 54 |
| SiO₂ | 32 |
| R₂O | 8 |
| Al₂O₃ | 3 |
| TiO₃ | 3 |
| Note: In the above, R denotes alkaline metals such as Li, Na, K, Rb, etc. | |

**Table 3**

| | mass % |
|---|---|
| CoO | 50 |
| Fe₂O₃ | 30 |
| MnO₂ | 20 |

<2> The protecting layer is not limited to that illustrated in the foregoing embodiment. The layer may be made also of a metal material, a metal oxide material, etc. In such case, if such alternative material has (1) a greater thermal expansion coefficient than the glass sheets, or (2) has a substantially same thermal coefficient as, but has a greater heat absorptivity than the glass sheets, or (3) has both a greater thermal expansion coefficient and a greater heat absorptivity than the glass sheets, it is possible to allow a compressive stress to remain in the glass sheets.
<3> The glass sheets employed in the glass panel according to the present invention are not limited to those in which one glass sheet thereof differs in length, width etc from the other glass sheet. Instead, the glass sheets may have same dimensions. And, the glass sheets may be superposed with the peripheral edges thereof being aligned to each other. In this case, the protecting layer 12 will be formed with a horizontally L-shaped cross section as shown in Fig. 6 to cover the peripheral edges. With this, the corners of the edges of the glass sheets 1 will not be exposed, so that the possibility of scars in the glass sheets 1 per se or breakage or damage of the glass panel may be reduced.
<4> In the foregoing embodiment, the protecting layer is provided at the peripheral edges in the non-opposing face of the glass sheets. However, what is essential here is the presence of such protecting layer at least at the peripheral edges of the non-opposing face of the glass sheets. Hence, it is also possible to provide such protecting layer over the entire faces of the glass sheets. In such case, it becomes possible to allow a compressive stress to remain over the entire faces of the glass sheets, whereby the possibility of breakage may be even further reduced. Also, if the protecting layer is transparent, this will be more advantageous since the good appearance of the glass panel may be maintained.
<5> The foregoing embodiment describes the so-called vacuum multiple glazing with depressurized gap. The glass panel relating to the present invention is not limited thereto. Instead, it may be construction as a multiple glazing with a gap V not depressurized, but filled with air.
<6> There are variety of applications of the glass panel relating to the present invention. For instance, the panel finds its applications in the field of building construction, vehicles (window shield of automobile, railway train or of a boat), various instruments (display panel of a plasma display device, a door or wall of a refrigerator or heat-insulating device), etc.
<7> The glass sheets employed in the glass panel relating to the present invention are not limited to the glass sheets manufactured by the floating method described in the foregoing embodiment. Other various kinds of sheet glass such as figured glass sheet, frosted glass sheet (glass sheet with a surface treatment for providing light diffusing function), wire glass sheet, tempered glass sheet, a glass sheet capable of absorbing thermic rays or ultraviolet rays may be employed instead. Any of these types of glass sheets may be employed singly or in combination.
Further, the composition of the glass sheets to be employed in the present invention is not particularly limited. Any composition used in the standard window pane such as soda lime silica glass, borosilicate glass, aluminosilicate glass, crystallized glass, etc. can be used.
<8> The material of the spacer 2 is not particularly limited to the stainless steel employed in the foregoing embodiment. Instead, the spacer 2 may be formed of other various kinds of material such as other kinds of metal material like Inconel 718 alloy, quartz glass, ceramic etc. Its shape is also not limited to the cylinder, but may be a square pillar, etc. The distance between the spacers 2 also can be varied appropriately.
<9> In the glass panel relating to the present invention, the outer peripheral edges of the glass sheets may be sealed with a metal solder as the sealing material, which contains as a major component thereof, indium, lead, tin or zinc.
The invention may be embodied in any other way than described above. The foregoing embodiment is not to limit the scope of the invention to the constructions shown in the accompanying drawings, but only to illustrate one preferred mode of embodying the invention. Further and other modifications will be readily made by one skilled in the art without departing from the scope of the invention set forth in the appended claims.

## Claims

1. A glass panel having:
a pair of glass sheets having one side faces thereof disposed in opposition to each other with a gap therebetween;
a sealing material for sealing outer peripheral edges of said pair of glass sheets;
**characterized by**
a damage protecting layer provided adjacent the outer peripheral edges of the other non-opposing faces of the glass sheets.

2. The glass panel according to claim 1, **characterized in that** the sealing material has a melting point which is lower than a softening point of the glass sheets; and the gap is maintained under a depressurized condition.

3. The glass panel according to claim 1 or 2, **characterized in that** said damage protecting layer is formed of a protecting material which has a greater heat expansion coefficient than that of the glass sheets and which is integrated with the glass sheets by means of bonding.

4. The glass panel according to claim 3, **characterized in that** the protecting material contains, as a major component thereof, a low-melting glass having a lower melting point than a softening point of the glass sheets.

5. The glass panel according to any one of claims 1-4, **characterized in that** said protecting layer is made of a material having a higher heat absorbing ability than the glass sheets and said damage protecting layer is formed integrally with the glass sheets by means of bonding.
